# EUROPEAN PATENT APPLICATION

(11) **EP 4 425 767 A1**
(43) Date of publication of application: **04.09.2024**
(21) Application number: 23181626.5
(22) Date of filing: 27.06.2023
(51) Int. Cl.: H02K 7/116, H02K 11/33, H02K 1/18, B62M 6/55, B62M 11/14, B62M 11/18, H02K 1/278

(54) **GEARED ELECTRIC MOTOR FOR A BICYCLE**

(30) Priority: 03.03.2023 KR 20230028542
(71) Applicant: HL Mando Corporation, Pyeongtaek-si, Gyeonggi-do 17962 (KR)
(72) Inventor: Kim, Myunghwan, 13499 Seongnam-si, Gyeonggi-do (KR)
(74) Representative: Gulde & Partner

(57) **Abstract**

An electric device suitable for a bicycle is disclosed. Said electric pedal device includes a housing (10) configured to form a space therein, a rotating shaft (20) passes through both ends of the housing, a reduction gear set (30) configured to reduce a rotational force of the rotating shaft, a rotor (40) configured to rotate by an output of the reduction gear set, a stator (50) including a winding around core laminations (120) and a hub (100). Wherein said core laminations are coupled to the hub while prevented by a structure that an axial deviation relative to the hub is possible. Further a print circuit board (60), controlling the electric power to the stator, is fixed to said housing.

## Description

### CROSS-REFERENCE TO RELATED APPLICATION

This application claims the benefit of Korean Patent Application No. 10-2023-0028542, filed on March 03, 2022 in the Korean Intellectual Property Office, the disclosure of which is incorporated herein by reference.

### BACKGROUND

### 1. Field

Embodiments of the present disclosure relate to an electric pedal device in which an axial deviation of a core lamination is prevented.

### 2. Description of the Related Art

In preparation for the depletion of fossil fuels in the transportation industry, great efforts are being made to develop means of transportation that operate on alternative fuels. In particular, along with new construction and expansion of bicycle exclusive lanes to increase the use of bicycles, which can reduce the operation of vehicles, great efforts are being put into developing technology for electric bicycles or electric vehicles that can travel comfortably over long distances.

In addition, by using storage batteries (secondary batteries), which are alternative energy with less pollution, as power sources, a lot of resources are being invested in the development of light, thin, and small-sized storage batteries that can be used for a long time, the development of technology for charging methods to reduce charging time, and the expansion of charging facilities so that storage batteries can be conveniently charged anywhere to solve the charging problem of electric bicycles, which are in the limelight as a modern means of transportation.

In order to promote the spread of electric bicycles, along with the expansion of exclusive lanes, which are infrastructure facilities for riding bicycles safely, the development of small and light storage batteries that can be used for a long time, the development of electric motors with low power consumption, and the development of technology for charging methods that enable easy and convenient charging in a short time, it is necessary not only to expand charging facilities, but also to develop a method of easily converting existing pedal-type bicycles into electric bicycles at a low cost.

Electric bicycles enable comfortable riding on flat ground and uphill roads by attaching a DC motor to a wheel hub or crankshaft of a general bicycle and assisting with power. The standard for the scope of application of electric bicycles refers to two-wheeled bicycles equipped with electric motor power to supplement human power.

Electric bicycles refer to bicycles that surely have a pedal driving function and move with the power of an electric motor. According to a driving method, the electric bicycles can be classified into, firstly, throttle: a bicycle that moves only with the power of an electric motor by manipulating an electric bicycle accelerator lever, secondly, a pedal assist system (PAS): a bicycle that moves with the simultaneous power of an electric bicycle pedal and an electric motor, and thirdly, throttle/PAS: a bicycle that supports both the throttle and PAS driving methods of electric bicycles.

### PATENT DOCUMENT

Korean Patent Publication No. 10-2014-0005169 (January 14, 2014)

### SUMMARY

Therefore, it is an aspect of the present disclosure to provide an electric pedal device which forms a reaction force when a cyclist pedals and generates electric energy by pedaling.
it is another aspect of the present disclosure to provide an electric pedal device to which a structure for preventing axial deviation of a core lamination in a stator core for generating electric energy is applied.

Additional aspects of the disclosure will be set forth in part in the description which follows and, in part, will be obvious from the description, or may be learned by practice of the disclosure.

In accordance with one aspect of the present disclosure, an electric pedal device includes a housing configured to form a space therein, a rotating shaft disposed to pass through the housing, a reduction gear set configured to reduce a rotational force of the rotating shaft, a rotor core configured to rotate by an output of the reduction gear set, a stator core including a hub and a core lamination coupled to the hub and having a structure preventing axial deviation of the hub, and a circuit substrate electrically connected to the stator core and fixed to the housing.

The hub may be formed at a center of the core lamination that is hollow by an insert casting method.

A plurality of grooves extending in an axial direction may be formed on an inner circumferential surface of the core lamination.

The hub may include insert portions inserted into the grooves, an upper locking jaw supporting an upper side of the core lamination, and a lower locking jaw supporting a lower side of the core lamination.

The hub may include a top having a triangular prism shape and a bottom having a cylindrical shape and having grooves extending downward in the axial direction from the top, and a protrusion extending in the axial direction and fitted into each of the grooves may be formed on the inner circumferential surface of the core lamination

The bottom may include the upper locking jaw supporting the upper side of the core lamination, and the lower locking jaw supporting the lower side of the core lamination.

A plurality of staking portions formed to be bent outward in a radial direction may be formed on the bottom.

The stator core may further include a lock nut to be fastened to an upper side of the hub.

The hub may include a top having a triangular prism shape and a bottom having a cylindrical shape and having a plurality of grooves at a corner side.

The lock nut may include a plurality of caulking portions formed with flat surfaces.

In the electric pedal device, the caulking portions may be configured to be deformed and inserted into the grooves after the lock nut is fastened to the hub.

The stator core may have the hub and the core lamination integrally formed to prevent the axial deviation of the hub.

The reduction gear set may include a first carrier coupled to the rotating shaft, a plurality of first planetary gears rotatably coupled to the first carrier, and a first ring gear coupled to the housing and meshing with the first planetary gear.

The reduction gear set may further include a second carrier rotating relative to the rotating shaft, a first sun gear formed on one surface of the second carrier and meshing with the first planetary gear, a plurality of second planetary gears rotatably coupled to the other surface of the second carrier, and a second ring gear coupled to the housing and meshing with the second planetary gear.

The reduction gear set may further include a second sun gear meshing with the second planetary gear, and the rotor core may be coupled to the second sun gear and configured to be interlocked with a rotation of the second sun gear.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view showing an electric pedal device according to an embodiment of the present disclosure;
FIG. 2 is a perspective view showing the inside of the electric pedal device shown in FIG. 1;
FIG. 3 is a cross-sectional view of the electric pedal device shown in FIG. 1;
FIG. 4 is an exploded perspective view of the electric pedal device shown in FIG. 1;
FIG. 5 is a perspective view showing a stator core integrally formed in an insert casting method;
FIG. 6 is a cross-sectional view of the stator core shown in FIG. 5;
FIG. 7 is a view showing a core lamination of the stator core shown in FIG. 5;
FIG. 8 is a view showing a hub of the stator core shown in FIG. 5;
FIG. 9 is a perspective view showing a stator core in which a hub is coupled to a core lamination;
FIG. 10 is an exploded perspective view of the stator core shown in FIG. 9;
FIG. 11 is a bottom view of the stator core shown in FIG. 9;
FIG. 12 is a view showing a staking portion shown in FIG. 11;
FIG. 13 is a perspective view showing a stator core to which a lock nut is coupled;
FIG. 14 is a perspective view showing a state in which the lock nut is separated from the hub in FIG. 13;
FIG. 15 is a view showing a state in which grooves are formed in the hub in FIG. 13; and
FIG. 16 is an enlarged view of portion I of FIG. 15.

### DETAILED DESCRIPTION

Hereinafter, embodiments of the present disclosure will be described in detail with reference to the accompanying drawings. The embodiments introduced below are provided as examples to sufficiently convey the spirit of the present disclosure to those skilled in the art to which the present disclosure belongs. The present disclosure is not limited to the embodiments to be described below and may be embodied in other forms. In order to clearly describe the present disclosure, parts irrelevant to the description will be omitted from the drawings, and the width, length, thickness, and the like of components may be exaggerated for convenience in the drawings. Like reference numbers refer to like elements throughout the specification.

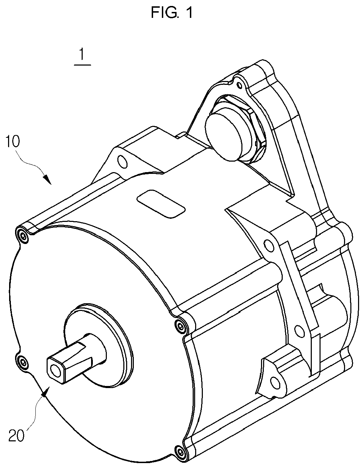

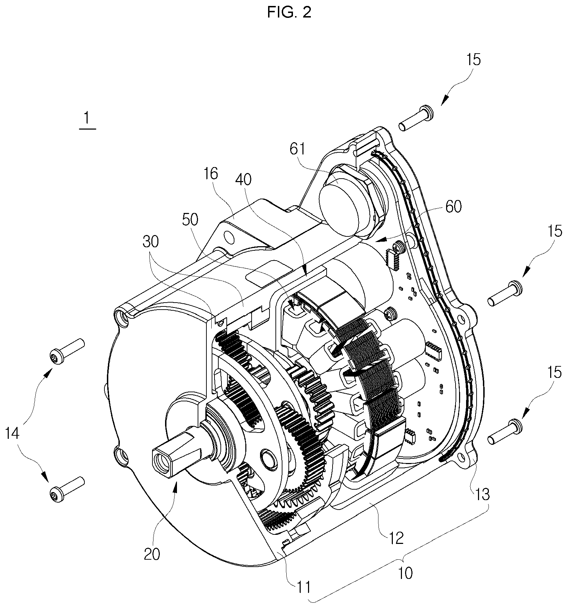

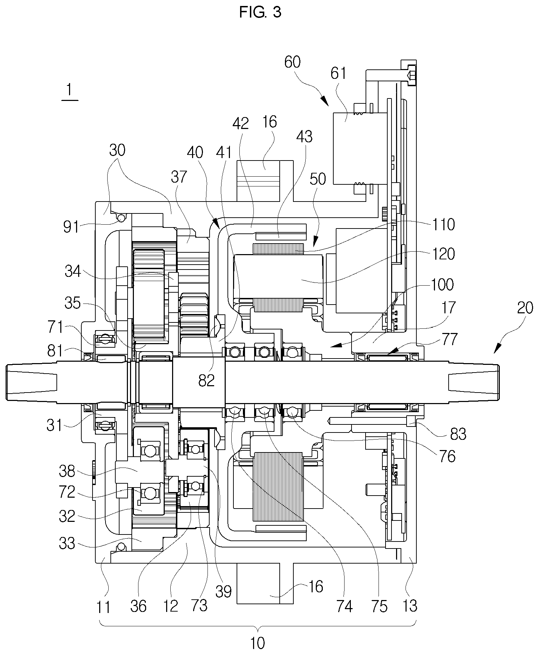

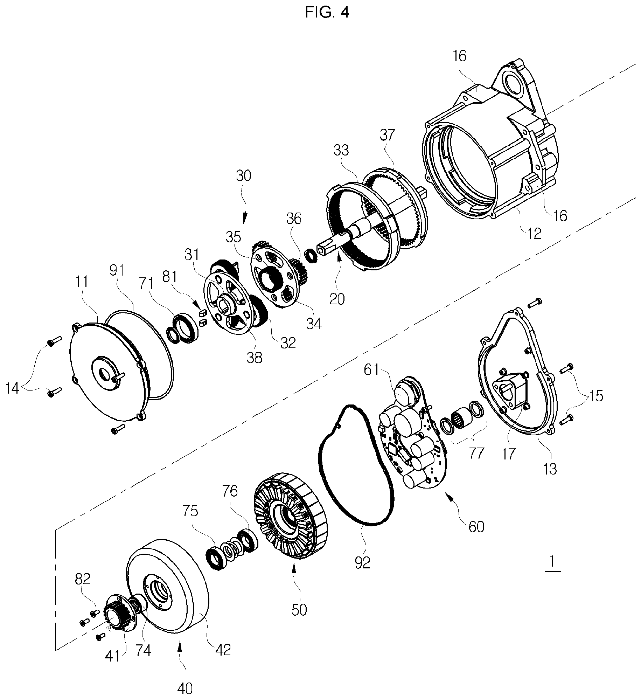

FIG. 1 is a perspective view showing an electric pedal device 1 according to an embodiment of the present disclosure. FIG. 2 is a perspective view showing the inside of the electric pedal device 1 shown in FIG. 1. FIG. 3 is a cross-sectional view of the electric pedal device 1 shown in FIG. 1. FIG. 4 is an exploded perspective view of the electric pedal device 1 shown in FIG. 1.

The electric pedal device 1 may include a housing 10 configured to form a space therein, a rotating shaft 20 disposed to pass through the housing 10, a reduction gear set 30 configured to reduce a rotational force of the rotating shaft 20, a rotor core 40 configured to rotate by an output of the reduction gear set 30, a stator core 50 that includes a hub 100 and a core lamination 110 coupled to the hub 100 and has a structure for preventing axial deviation of the hub 100, and a circuit substrate 60 electrically connected to the stator core 50 and fixed to the housing 10. The circuit substrate 60 may include a connector 61.

The rotating shaft 20 is rotated by a user's pedaling, and a rotational force of the rotating shaft 20 rotates the rotor core 40, thereby producing electrical energy in the stator core 50. The electrical energy produced in this manner may be stored in an externally disposed battery (not shown).

Referring to FIGS. 3 and 4, the housing 10 may include a first cover 11 close to the reduction gear set 30, a housing body 12, and a second cover 13 to which the circuit substrate 60 is fixed. The housing body 12 may have a cylindrical shape. The housing body 12 may include a mounting part 16 for being coupled to a bicycle frame (not shown).

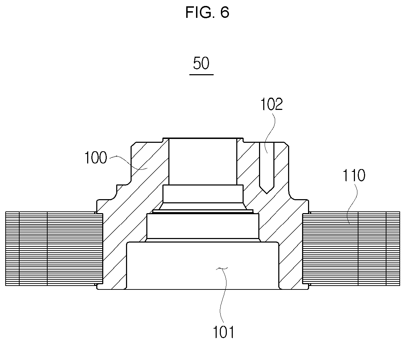

The hub 100 of the stator core 50 may be coupled to a coupler 17 of the housing 10 configured to penetrate the circuit substrate 60. The coupler 17 may be formed inside the second cover 13. The hub 100 may be coupled to the coupler 17 by a bolt 83. The bolt 83 may penetrate the coupler 17 from an outside of the second cover 13 and may be fastened to a fastening hole 102 (refer to FIG. 6) formed in the hub 100.

The reduction gear set 30 includes a first carrier 31 coupled to the rotating shaft 20, a plurality of first planetary gears 32 rotatably coupled to the first carrier 31, and a first ring gear 33 coupled to the housing body 12 and meshing with the first planetary gear 32. The first carrier 31 may be coupled to the rotating shaft 20 by a key 81 and interlock with the rotation of the rotating shaft 20.

A bearing 71 may be interposed between the first cover 11 and the first carrier 31. A rotating shaft 38 may be coupled to the first carrier 31, and a bearing 72 may be interposed between the rotating shaft 38 and the first planetary gear 32.

The reduction gear set 30 may further include a second carrier 34 configured to rotate relative to the rotating shaft 20, a first sun gear 35 formed on one surface of the second carrier 34 and meshing with the first planetary gear 32, a plurality of second planetary gears 36 rotatably coupled to the other surface of the second carrier 34, and a second ring gear 37 coupled to the housing body 12 and meshing with the second planetary gear 36.

There may be a predetermined interval in a radial direction between an outer circumferential surface of the second carrier 34 and an inner circumferential surface of the rotating shaft 20. A rotating shaft 39 may be coupled to the second carrier 34, and a bearing 73 may be interposed between the rotating shaft 39 and the second planetary gear 36.

The reduction gear set 30 may include a second sun gear 41 meshing with the second planetary gear 36. The rotor core 40 may be configured to be coupled to the second sun gear 41 and interlocked with the rotation of the second sun gear 41. A frame unit 41 may be coupled to the second sun gear 41 by a bolt 82. A bearing 74 and a bearing 75 may be interposed between the frame unit 41 and the rotating shaft 20.

A magnetic body 42 may be attached to an inner circumferential surface of the frame unit 41 of the rotor core 40. The stator core 50 may be configured to generate power when the magnetic body 42 of the rotor core 40 rotates. A coil winding 120 may be coupled to the core lamination 110.

A bearing 76 may be interposed between the hub 100 and the rotating shaft 20. Therefore, the rotation of the rotating shaft 20 does not affect a position of the stator core 50. A bearing 77 may be interposed between the rotating shaft 20 and the coupler 17.

Referring to FIG. 4, the first cover 11 may be coupled to the housing body 12 by a bolt 14. The second cover 13 may be coupled to the housing body 12 by a bolt 15. A sealing portion 91 may be interposed between the first cover 11 and the housing body 12. A sealing portion 92 may also be interposed between the second cover 13 and the housing body 12.

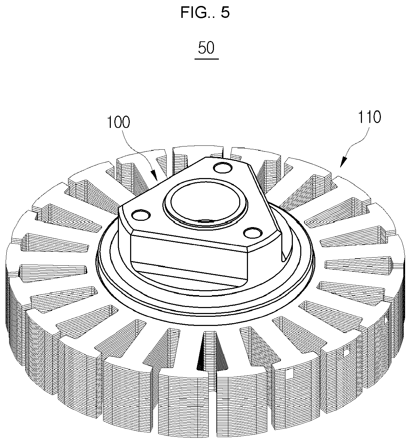

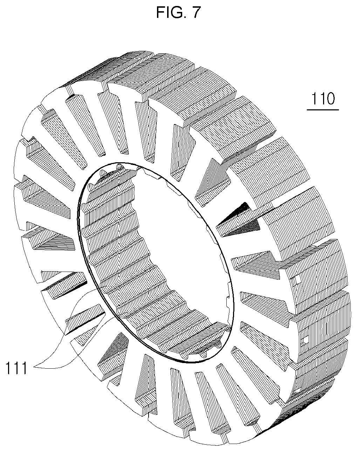

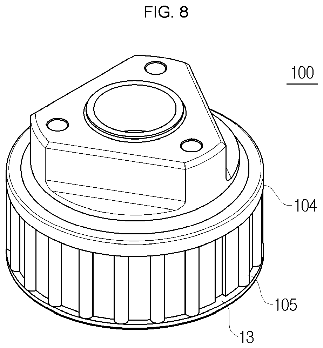

FIG. 5 is a perspective view showing the stator core 50 integrally formed by an insert casting method. FIG. 6 is a cross-sectional view of the stator core 50 shown in FIG. 5. FIG. 7 is a view showing the core lamination 110 of the stator core shown in FIG. 5. FIG. 8 is a view showing the hub 100 of the stator core 50 shown in FIG. 5.

The hub 100 and the core lamination 110 may be integrally formed by a lowtemperature insert casting method. The hub 100 may be formed by casting from a molten metal at a center of the core lamination 110 that is hollow. The hub 100 may be integrated with the core lamination 110 by being inserted and casted in a low-pressure casting method, and thus it is possible to prevent the core lamination 110 from being axially separated from the hub 100 and to have a structure for preventing the rotation of the core lamination 110 through its own shape.

Referring to FIGS. 7 and 8, a plurality of grooves 111 extending in the axial direction may be formed on an inner circumferential surface of the core lamination 110. In the process of forming the hub 100 in a casting method, insert portions 103 inserted into the grooves 111 may be formed. A through portion 101 through which the rotating shaft 20 passes may be formed at a center of the hub 100, and the fastening hole 102 may be formed at an upper side of the hub 100.

The hub 100 may include an upper locking jaw 104 supporting an upper side of the core lamination 110 and a lower locking jaw 105 supporting a lower side of the core lamination 110. Since the integrally formed hub 100 supports the upper and lower sides of the core lamination 110, axial deviation of the core lamination 110 relative to the hub 100 may be prevented.

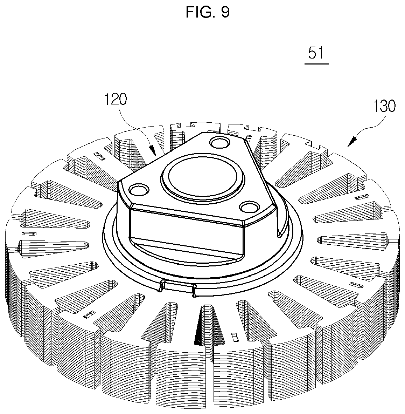

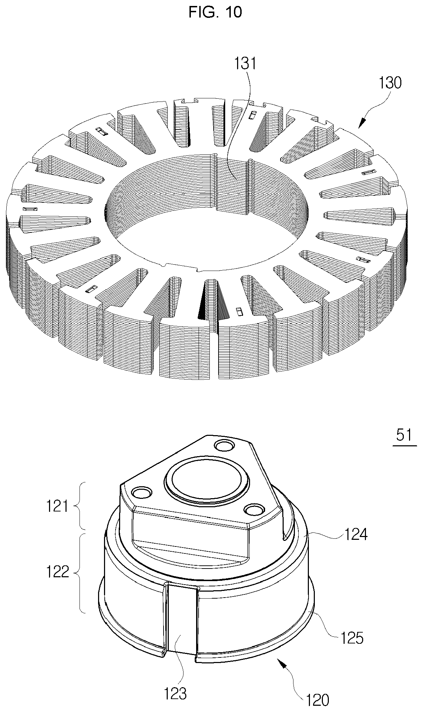

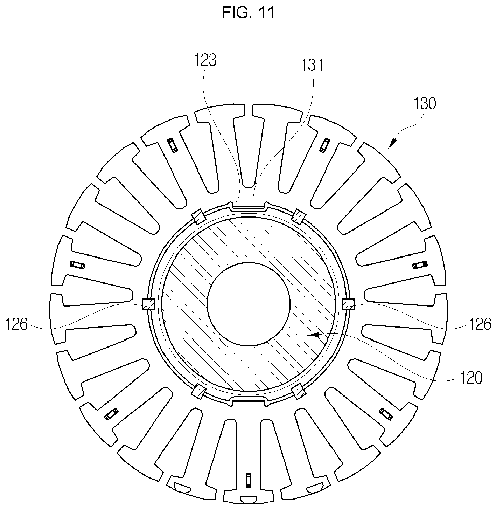

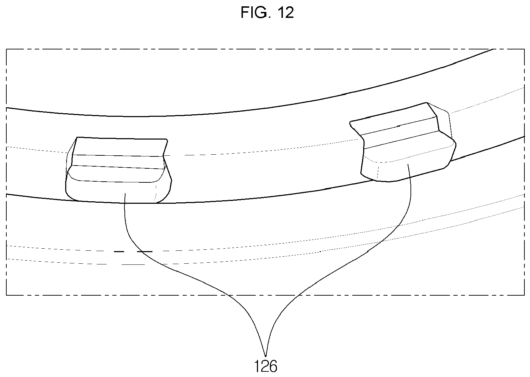

FIG. 9 is a perspective view showing a stator core 51 in which a hub 120 is coupled to a core lamination 130. FIG. 10 is an exploded perspective view of the stator core 51 shown in FIG. 9. FIG. 11 is a bottom view of the stator core 51 shown in FIG. 9. FIG. 12 is a view for describing a staking portion 126 shown in FIG. 11. Duplicated descriptions of contents described in the embodiment described above will be omitted.

In the present embodiment, since high-pressure casting cannot be applied to meet a lamination accumulation tolerance management range (17+0.4/-0.2) of the core lamination, an assembly structure method is reflected.

The hub 120 may include a top 121 having a triangular prism shape and a bottom 122 having a cylindrical shape and having grooves 123 extending downward in the axial direction from the top 121. Protrusions 131 extending in the axial direction and fitted into the grooves 123 may be formed on an inner circumferential surface of the core lamination 130. The bottom 122 may include an upper locking jaw 124 supporting an upper side of the core lamination 130 and a lower locking jaw 125 supporting a lower side of the core lamination 130. These grooves 123 may have the same shape as two keys, and may prevent the rotation of the core lamination 130 relative to the hub 120.

Referring to FIG. 11, a plurality of staking portions 126, which are formed to be bent outward in the radial direction, may be formed on a lower surface of the bottom 122. The staking portion 126 can prevent axial deviation of the core lamination 130 more firmly. Referring to FIG. 12, a shape of the staking portion 126 can be confirmed. In addition, internal rotational force may be increased through the staking portion 126.

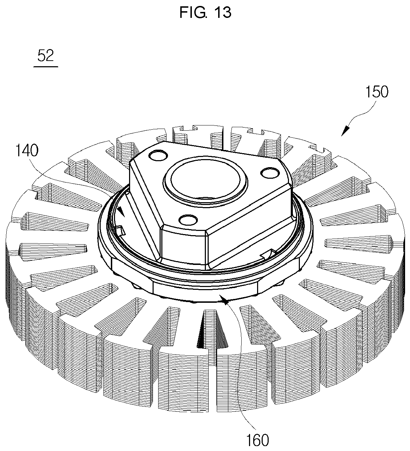

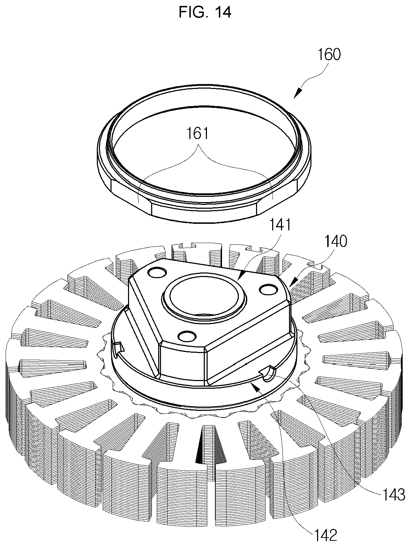

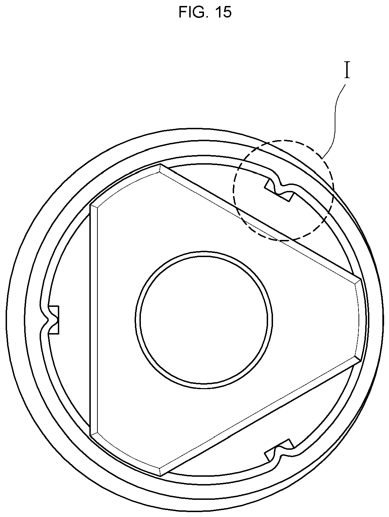

FIG. 13 is a perspective view showing a stator core 52 to which a lock nut 160 is coupled. FIG. 14 is a perspective view showing a state in which the lock nut 160 is separated from a hub 140 in FIG. 13. FIG. 15 is a view showing a state in which grooves 143 are formed in the hub 140 in FIG. 13. Duplicated descriptions of the contents described in the embodiment described above will be omitted.

The stator core 52 may include the hub 140, a core lamination 150, and the lock nut 160 fastened to an upper side of the hub 140. The hub 140 may include a top 141 having a triangular prism shape and a bottom 142 having a cylindrical shape and having a plurality of grooves 143 formed at the corner side.

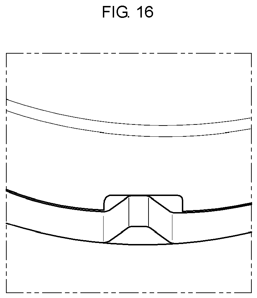

FIG. 15 is a view of a state in which the grooves 143 are formed, which is photographed from the upper side, and FIG. 16 is an enlarged view of portion I of FIG. 15. Referring to these, the state in which the grooves 143 are formed can be confirmed.

The lock nut 160 may include a plurality of caulking portions 161 formed with flat surfaces. The caulking portions 161 may be configured to be deformed after the lock nut 160 is fastened to the hub 140 and inserted into the grooves 143. The caulking portion 161 may be deformed inward in the radial direction, thereby preventing axial deviation of the core lamination 150.

In the present embodiment, a method of fixing the core lamination 150 of the stator core 52 so as not to be axially separated from the hub 140 can be implemented by an assembly structure that forms the caulking portion 161 after the lock nut 160 is fastened. In the embodiment described above, a structure in which a core lamination and an aluminum hub are integrated in an insert die-casting method is used in the electric pedal device, but in the present embodiment, it is derived by approaching the assembly structure side. Here, the core lamination can be firstly fixed in the axial direction by fastening the lock nut 160 using sufficient torque, and loosening torque can be increased by forming the caulking portion 161 secondly.

First, in the hub 140, separate grooves 143 into which a caulked shape of the lock nut 160 together with a screw shape can fit can be processed so that the lock nut 160 can be fastened. This is according to a principle that loosening torque is increased due to the shape of the plastically deformed lock nut 160.

In addition, the lock nut 160 may have a tab shape corresponding to the screw shape of the hub 140, and the lock nut 160 may have a thin thickness so as to be folded after being caulked. In addition, when the lock nut 160 has a backside width shape, it can be fastened to the hub 140 using a tool.

Unlike a stator core manufactured in the insert die-casting method, such a structure can be presented as a prefabricated coupling structure using other parts such as a lock nut in a situation where insert die-casting is difficult to apply.

An electric pedal device according to the embodiment of the present disclosure is formed by injecting a hub into a core lamination in a low-pressure insert casting method, and thus a coupling between the core lamination and the hub can be strengthened during the injection process.

In an electric pedal device according to the embodiment of the present disclosure, axial deviation of a core lamination can be prevented by forming a stacking portion on a hub with a core coupled to the core lamination.

In an electric pedal device according to the embodiment of the present disclosure, axial deviation of a core lamination can be prevented by fastening a lock nut to a hub and forming a caulking portion with the core coupled to the core lamination.

As is apparent from the above description, the present disclosure has been described with reference to an embodiment shown in the accompanying drawings, but this is only exemplary, and it would be appreciated by those skilled in the art that various modifications and equivalent other embodiments can be made therefrom. Therefore, the true scope of the present disclosure should be defined only by the appended claims.

## Claims

1. An electric pedal device comprising:
a housing (10) configured to form a space therein;
a rotating shaft (20) disposed to pass through the housing (10);
a reduction gear set (30) configured to reduce a rotational force of the rotating shaft (20);
a rotor core (40) configured to rotate by an output of the reduction gear set (30);
a stator core (50) including a hub and a core lamination coupled to the hub and having a structure preventing axial deviation of the hub; and
a circuit substrate (60) electrically connected to the stator core (50) and fixed to the housing (10).

2. The electric pedal device according to claim 1, wherein the hub is formed at a center of the core lamination that is hollow by an insert casting method.

3. The electric pedal device according to claim 2, wherein a plurality of grooves extending in an axial direction are formed on an inner circumferential surface of the core lamination.

4. The electric pedal device according to claim 3, wherein the hub includes insert portions inserted into the grooves, an upper locking jaw supporting an upper side of the core lamination, and a lower locking jaw supporting a lower side of the core lamination.

5. The electric pedal device according to claim 1, wherein the hub includes a top having a triangular prism shape and a bottom having a cylindrical shape and having grooves extending downward in an axial direction from the top, and
a protrusion extending in the axial direction and fitted into each of the grooves is formed on an inner circumferential surface of the core lamination.

6. The electric pedal device according to claim 4, wherein the bottom includes the upper locking jaw supporting the upper side of the core lamination, and the lower locking jaw supporting the lower side of the core lamination.

7. The electric pedal device according to claim 4, wherein a plurality of staking portions (126) formed to be bent outward in a radial direction are formed on the bottom.

8. The electric pedal device according to claim 1, wherein the stator core (50) further includes a lock nut (160) fastened to an upper side of the hub.

9. The electric pedal device according to claim 8, wherein the hub includes a top having a triangular prism shape and a bottom having a cylindrical shape and having a plurality of grooves formed at a corner side.

10. The electric pedal device according to claim 9, wherein the lock nut (160) includes a plurality of caulking portions (161) formed with flat surfaces.

11. The electric pedal device according to claim 10, wherein the caulking portions (161) are configured to be deformed and inserted into the grooves after the lock nut (160) is fastened to the hub.

12. The electric pedal device according to claim 1, wherein the stator core (50) has the hub and the core lamination integrally formed to prevent the axial deviation of the hub.

13. The electric pedal device according to claim 1, wherein the reduction gear set (30) includes a first carrier coupled to the rotating shaft (20), a plurality of first planetary gears rotatably coupled to the first carrier, and a first ring gear coupled to the housing (10) and meshing with the first planetary gear.

14. The electric pedal device according to claim 13, wherein the reduction gear set (30) further includes a second carrier rotating relative to the rotating shaft (20), a first sun gear formed on one surface of the second carrier and meshing with the first planetary gear, a plurality of second planetary gears rotatably coupled to the other surface of the second carrier, and a second ring gear coupled to the housing (10) and meshing with the second planetary gear.

15. The electric pedal device according to claim 14, wherein the reduction gear set (30) further includes a second sun gear meshing with the second planetary gear, and
the rotor core (40) is coupled to the second sun gear and is configured to interlock with a rotation of the second sun gear.

## Amended claims

### Amended claims in accordance with Rule 137(2) EPC.

1. An electric pedal device (1) comprising:
a housing (10) configured to form a space therein;
a rotating shaft (20) disposed to pass through the housing (10);
a reduction gear set (30) configured to reduce a rotational force of the rotating shaft (20);
a rotor core (40) configured to rotate by an output of the reduction gear set (30);
a stator core (50, 51, 52) including a hub (100, 120, 140) and a core lamination (110, 130, 150) coupled to the hub (100, 120, 140) and having a structure preventing axial deviation of the hub (100, 120, 140); and
a circuit substrate (60) electrically connected to the stator core (50, 51, 52) and fixed to the housing (10),
wherein the hub (100, 120) of the stator core (50, 51) is formed at a center of the core lamination (110, 130) that is hollow by an insert die-casting method or
the stator core (52) includes the hub (140), the core lamination (150), and a lock nut (160) fastened to an upper side of the hub (140).

2. The electric pedal device (1) according to claim 1, wherein a plurality of grooves (111) extending in an axial direction are formed on an inner circumferential surface of the core lamination (110).

3. The electric pedal device (1) according to claim 1 or2, wherein the hub (100) includes insert portions (103) inserted into the grooves (111), an upper locking jaw (104) supporting an upper side of the core lamination (110), and a lower locking jaw supporting (125) a lower side of the core lamination (110).

4. The electric pedal device (1) according to claim 1, wherein the hub (120) includes a top (121) having a triangular prism shape and a bottom (122) having a cylindrical shape and having grooves (123) extending downward in an axial direction from the top (121), and
a protrusion (131) extending in the axial direction and fitted into each of the grooves (123) is formed on an inner circumferential surface of the core lamination (130).

5. The electric pedal device (1) according to claim 4, wherein the bottom (122) includes the upper locking jaw (124) supporting the upper side of the core lamination (130), and the lower locking jaw (125) supporting the lower side of the core lamination (130).

6. The electric pedal device (1) according to claim 4 or 5, wherein a plurality of staking portions (126) formed to be bent outward in a radial direction are formed on the bottom (122).

7. The electric pedal device (1) according to claim 1, wherein the hub (140) includes a top (141) having a triangular prism shape and a bottom having a cylindrical shape and having a plurality of grooves (143) formed at a corner side.

8. The electric pedal device (1) according to claim 1 or 7, wherein the lock nut (160) includes a plurality of caulking portions (161) formed with flat surfaces.

9. The electric pedal device (1) according to claim 1, 7 or 8, wherein the caulking portions (161) are configured to be deformed and inserted into the grooves (143) after the lock nut (160) is fastened to the hub (140).

10. The electric pedal device (1) according to claim 1, wherein the stator core (50) has the hub (100) and the core lamination (110) integrally formed to prevent the axial deviation of the hub (100).

11. The electric pedal device (1) according to any of claims 1 to 10, wherein the reduction gear set (30) includes a first carrier (31) coupled to the rotating shaft (20), a plurality of first planetary gears (32) rotatably coupled to the first carrier (31), and a first ring gear coupled (33) to the housing (10) and meshing with the first planetary gear (32),
a second carrier (34) rotating relative to the rotating shaft (20), a first sun gear (35) formed on one surface of the second carrier (34) and meshing with the first planetary gear (32), a plurality of second planetary gears (36) rotatably coupled to the other surface of the second carrier (34), and a second ring gear (37) coupled to the housing (10) and meshing with the second planetary gear (36),a second sun gear (41) meshing with the second planetary gear (36), and
the rotor core (40) is coupled to the second sun gear (41) and is configured to interlock with a rotation of the second sun gear (41).
